# EUROPEAN PATENT SPECIFICATION

(11) **EP 4 299 139 B1**
(45) Date of publication and mention of the grant of the patent: **06.08.2025**
(21) Application number: 23168989.4
(22) Date of filing: 20.04.2023
(51) Int. Cl.: A62B 1/22, F16K 3/02

(54) **A SYSTEM OF ADAPTIVE RELEASE VALVES OF AN AIRBAG, IN PARTICULAR OF A RESCUE AIR CUSHION, AND AN AIRBAG THAT CONTAINS IT**
SYSTEM VON ADAPTIVEN AUSLÖSUNGSVENTILEN EINES AIRBAGS, INSBESONDERE EINES RETTUNGSLUFTKISSENS, UND AIRBAG DAMIT
SYSTÈME DE SOUPAPES DE LIBÉRATION ADAPTATIVES D'UN COUSSIN GONFLABLE, EN PARTICULIER D'UN COUSSIN GONFLABLE DE SECOURS, ET COUSSIN GONFLABLE QUI LE CONTIENT

(30) Priority: 29.06.2022 PL 44158822
(43) Date of publication of application: 03.01.2024
(73) Proprietor: Instytut Podstawowych Problemów Techniki Polskiej Akademii Nauk, 02-106 Warszawa (PL)
(72) Inventor: Faraj, Rami, 02 826 Warsaw (PL); Kowalski, Tomasz Marcin, 01 618 Warsaw (PL); Gabryel, Dorian Mateusz, 03 138 Warsaw (PL); Poplawski, Blazej, 04-041 Warsaw (PL); Calka, Jan, 03 254 Warsaw (PL)
(74) Representative: Kondrat, Mariusz

(56) References cited:
- EP-A1- 0 317 904
- CN-A- 108 853 877
- DE-A1- 102019 216 581
- DE-U- 7 222 167
- US-A- 4 068 739

## Description

The subject of the invention is an airbag assembly with a system of adaptive release valves of the airbag, in particular of a rescue air cushion.

As indicated in the application description PL436060 A1**,** rescue air cushions with pneumatic frame are widely used by fire brigades around the world due to their compact design and relatively low weight. Their design is based on a pneumatic frame, inflated from a compressed air tank. Walls which enclose a specific volume of gas are attached to the frame. Thus an airbag is formed, onto which an evacuated/rescued person can fall. Due to the fact that the volume of the airbag is large, it is not possible to fill it with compressed air from the tank and the airbag is filled by itself. After the pneumatic frame is put up, the gas pressure inside the bag is equalized due to the air flow through the openings in the walls of the rescue air cushion. Now the rescue air cushion can be considered fully put up and ready to take impact at the moment when the gas pressure inside the airbag of the rescue air cushion is equal to the ambient pressure.

For example, application PL108257 U discloses a rescue air cushion whose design includes a pneumatic frame which is a frame of a gas-tight fabric rectangular cuboid supporting the walls of the airbag. The airbag is divided by a partition into two parts and in the partition there are at least seven openings for pressure equalization. On the outer walls there are at least two handles made of tape, with a pocket for a compressed air tank attached to the wall below the frame.

Document DE7222167 U refers to a jumping mat for sport-rescue services made of an inflatable rubber bag with one or more openings in the wall that are closed by release valves, such as lip valves, ball valves, etc., which open depending on the direction of flow if the pressure is increased. Whereby, in a preferred embodiment, the above-mentioned adjustable openings are designed so that they can be controlled and closed with zippers.

Document CN206792824 U refers to a rescue air cushion made of covering fabric, which acts as a buffer and consists of a main airbag, an auxiliary buffer bag that constitute an upper and lower airbag, covering fabric and air support columns equipped with access ports that are fastened with a strap.

Application US3603430 A refers to a single-chamber shock-absorbing airbag, the structure of which is stabilized by integrated, diagonal tubular struts forming a cross in the upper plane of the pneumatic frame.

Document DE7301686 U refers to a rescue air cushion in which the impact is absorbed by flexible air tanks, and the absorption is affected by air pressure regulation and adjustable valves. The disclosed rescue air cushion may consist of one or more chambers, and its valves may be common to all chambers or separate and individually controlled for each air chamber.

Application DE2915303 A1 discloses a spring mattress, particularly for rescuing people falling out of burning buildings, which is made of a flexible and largely tight material. Preferably, four air openings at each of the corners are cut in the covering material. Two adjacent air openings are closed from below by an inlet valve or shielded from above by an outlet valve sewn in on one side. These valves are made of relatively rigid PVC laminate. The inlet valve is pressed into the air openings by means of rubber cables or similar, while the outlet valve falls by means of gravitation onto the cover. The cover is sewn to the landing surface of the bag so that the air inlet openings cover the two openings in the landing surface so that air can be sucked in from the outside. Air openings with a valve are located inside the bag so that air can get inside the airbag. An outlet valve prevents air from returning to the airbag.

In turn, the utility model PL54564 Y1 discloses a rescue air cushion consisting of two stacked pneumatic bags, of which the lower one is divided by three mesh walls, and the upper one is twice as high as the lower one. In the middle part of the upper bag there are five openings with a safety flap. On the external sides of the upper bag there are channels in a shape similar to the letter F, which are connected to the lower external bag, covered with safety flaps made of folds of material. In addition, the lower airbag has a round opening connected to the air supply sleeve. The above-mentioned circular opening of the lower airbag is located at a half the height of the mesh wall. In the bottom of the lower airbag connecting the lower airbag and the upper airbag there are two circular openings in the middle of the external parts of the lower airbag.

Application DE102019216581 discloses a valve with a housing, wherein the housing forms at least one group with at least two fluid passages. Furthermore, the valve comprises a control element arranged inside the housing in the form of a foil, wherein the foil forms at least one valve opening, via which a fluid-conducting connection can be established between the fluid passages of the group. Such a valve is characterized in that the foil can be wound and unwound onto at least one shaft for displacement of the valve opening along a longitudinal direction of the foil.

Application EP317904 discloses a jump safety apparatus having a frame consisting of inflatable tubes, a fabric forming the jumping surface, and a cover situated at the sides and below, the cover and the fabric enclosing one or more air-filled cavities and the apparatus being provided with a plurality of air passage apertures laterally on the cover. At least the majority of the air passage apertures are arranged in the vicinity of the support located in the corners of the apparatus, the air passage apertures preferably forming vertical rows which extend approximately parallel to the support in the corners of the apparatus.

At present, state-of-the-art airbags, in particular rescue air cushions, are not equipped with a system that provides adaptation to a certain weight and speed with which a body falls on/hits the rescue air cushion. Currently, release openings in the side walls of the device are designed for the same, default impact conditions, which results in low efficiency of energy absorption from the impacting body under extreme conditions, e.g. high or low body weight, high fall speed.

The goal of the invention is to provide a system for adapting the airbag (in particular rescue air cushion) to identified/estimated impact/landing conditions, i.e. mass and speed of the falling body at the time of its contact with the surface of the airbag.

The subject of the invention is an airbag assembly as defined by claim 1 and comprising a system of adaptive airbag release valves, in particular a rescue air cushion. with openings in the side walls, arranged in at least one column or row, characterized in that at least one column or row is combined with at least one sliding shutter with the first openings and at least one through-pocket with the second openings. Thereby the shutter is placed between the side wall and through-pocket, and the side wall and the through-pocket provide a guide for the shutter controlled by a shutter-sliding module, which is connected to the control system and power source.

Preferably, the shutter-sliding module is equipped with a rotary actuator and at least one spring or a pair of counter-rotating rotary actuators or a linear actuator and a pull-element or a pair of linear actuators working in opposite directions.

Preferably, the control system is equipped with a microcontroller with a memory containing an algorithm for adapting the airbag to the impact conditions, which calculates the optimal gas release from at least one chamber, based on the data of the expected impact conditions entered into the control system, by determining the optimal overlap of the openings in the side walls of the airbag with the first and second openings, determining the position of the shutters relative to the side walls and through-pockets. It then sends a control signal to the shutter-sliding module, or sends information about the intended overlap and position to the shutter-sliding module, whereby impact conditions data constitute at least one parameter, which includes the weight of the landing person, impact speed, height, or a combination thereof.

Preferably, the shutter and the through-pocket have two parts, and a hinge is located between the two parts of the shutter.

Preferably, the shutter-sliding module is equipped with a system for measuring the relative position of the first openings of the shutter relative to the openings in the side walls and the second openings of the through-pocket.

Preferably, the shutter-sliding module is equipped with one or two limit switches.

Preferably, the measuring system consists of at least one row of perforation on the shutter for non-contact measurement and at least one optical sensor consisting of an emitter and a receiver.

Preferably, the measuring system consists of at least one row of perforation for contact measurement and a rotary displacement sensor.

Preferably, the measuring system consists of at least two first contact elements located on the cover and corresponding second contact elements located on the through-pocket or side wall of the airbag. Preferably, the measuring system consists of a measuring ruler.

Preferably, the measuring system is coupled to a system indicating the degree of opening of the valves.

According to the invention, the airbag assembly consists of a pneumatic frame and an airbag supported by it. Thereby the airbag has at least one chamber and openings, characterized in that the openings are arranged in at least one column located near the vertical edges of its side walls or the openings are arranged in at least one row located by at least one horizontal edge of the wall, basically in the middle of the side wall or near the horizontal edge of the chamber.

Preferably, in the upper plane of the pneumatic frame there is a pneumatic element in the shape of a cross or a flat chamber.

Preferably, the airbag according to the invention comprises at least two chambers arranged side by side or one on top of the other. Preferably, at least one chamber is divided horizontally or vertically into at least two sub-chambers.

The invention provides the following advantages:
- it provides effective adaptation of the airbag (in particular rescue air cushion) to identified/estimated impact/landing conditions, i.e. the mass and speed of the body at the time of contact with the surface of the rescue air cushion. This problem is especially relevant when jumps are performed by children or persons with a large body mass, or when jumping from different heights. It is important that firefighters or other operators of the rescue air cushion have the ability to adjust its characteristics to provide best possible absorption and energy dissipation of the falling object/landing person;
- a spring element (e.g. at least one spring) of the shutters provides a "fail-safe" function, since in the event of a power failure or a deliberate disconnection of the clutch, the shutter is brought to a specific position, which - depending on the mechanical parameters of the system - can be adjusted to selected impact conditions, e.g. the worst acceptable conditions of impact against the rescue air cushion, air release according to the design of current non-adaptive rescue air cushions;

- the use of a measuring system to determine the relative position of the shutters and its coupling with the signalling system allows for verification of the adaptation of the airbag, realized by sliding the shutters relative to the other openings, and informing the operator or control system of the actually obtained degree of opening of the release valves;
- the addition of a pneumatic cross or a flat chamber connected to the frame increases the relative rigidity of the airbag according to the invention and provides favourable squeeze characteristics;
- the use of two, three or more chambers makes it possible to use the airbag according to the invention to amortize falls of persons from larger heights;

The invention is presented in embodiments and in the figure, where Fig. 1 shows an airbag assembly according to the invention with a valve system according to the invention in an overall view; Fig. 2 shows an airbag assembly according to the invention with a valve system according to the invention in a top and side view; Fig. 3 shows a schema of the system of the valves for the assembly according to the invention with particular reference to the relative position of the shutter, the through-pocket and the shutter-sliding module; Fig. 4 shows a variant of the shutter-sliding module of the valve system for the assembly according to the invention, which consists of two oppositely arranged linear actuators; Fig. 5 shows variants of a system for measuring the relative position of the shutter openings relative to the openings in the side walls of the airbag and the openings in the through-pockets of the system according for the assembly to the invention.

A detailed description of embodiments of the invention is presented below.

Whereby, within the meaning of the invention, the phrase "in an embodiment" is to be understood as in one or more embodiments. In addition, the characteristics of individual embodiments can be combined with each other. The descriptions of embodiments of the invention in this application are provided as an example and are not intended to limit the scope of the invention. Described embodiments include various features, not all of which are required in all embodiments of the invention. Some designs use only chosen features or possible combinations of features. Described variants of embodiments and embodiments of the invention with different combinations of features mentioned in the described embodiments are understandable to an expert in the field. The scope of the invention is limited only by the claims. According to the invention, the system of adaptive release valves is designed for use in an airbag (e.g., a rescue air cushion) containing openings in its side walls.

In one of the embodiments, the openings in the side walls of the airbag are arranged in one or more columns (e.g. one column, two columns, three columns, etc.) located near all vertical edges of its side walls and combined with one or more sliding shutter with the first openings and one or more through-pocket with the second openings. Whereby, the shutter is located between the side wall and the through-pocket. The side wall and the through-pocket provide a guide for the shutter controlled by the shutter-sliding module, which is connected to the control system and the power source.

In a preferred embodiment, the openings in the side walls of the airbag are arranged in two columns near each vertical edge of the side walls. Whereby, according to the invention, it is possible to cover both columns of openings and to cover one of them, depending on the design of the shutter, which may include all or selected columns.

In one embodiment, openings in the side walls of the airbag are arranged in two columns near each vertical edge of the side walls, and each column is combined with one shutter and one through-pocket. In another embodiment variant, one shutter (and a through-pocket) is common to all the columns of openings.

In one embodiment, the openings in the side walls of the airbag are arranged in two columns near each vertical edge of the side walls, and one of the columns has a sliding shutter. In such a system, partial or complete closing of the openings in one column increases gas release. When the system is switched off, the spring of the drive system of the shutter-sliding module brings the shutter to a defined position (e.g. corresponding to the complete closure of column openings). Whereby, the position to which the spring will be brought depends on its parameters and the method and place of attachment, as well as on the parameters of the actuator/drive. Complete closing of the openings in the first column constitutes a special, advantageous case, but it is not an obligatory variant.

In another embodiment, the openings in the side walls of the airbag are arranged in one column near each vertical edge of the side walls.

In another embodiment, the openings in the side walls of the airbag are arranged in one or more rows (e.g. one row, two rows, three rows, etc.) located by at least one horizontal edge of the side wall.

In one embodiment, openings are arranged in a single row located by all horizontal edges of the airbag. In another embodiment, the openings are arranged in two rows located by all horizontal edges of the airbag.

In another embodiment, the openings are arranged in two rows located by two horizontal edges of the airbag.

In another embodiment, the system for the assembly according to the invention is implemented in a bag with three chambers, one on top of the other, and the openings are arranged in one row located near the horizontal edges of the chambers - i.e. in the areas corresponding to the division of the airbag into chambers (which are not necessarily identical to the edges of the entire walls).

In another embodiment, the system for the assembly according to the invention is implemented in a bag with two chambers, one on top of the other, and the openings are arranged in two rows located in the middle of the side wall (one in the upper chamber, the other in the lower chamber), symmetrical to the edge dividing the bag into chambers.

In one embodiment, a rescue air cushion is the above-mentioned airbag. In a preferred embodiment, the above-mentioned airbag is a rescue air cushion whose airbag is essentially a rectangular cuboid. The system for the assembly according to the invention can also be used in airbags of other shapes.

In one embodiment, the cover and the through-pocket of the system for the assembly according to the invention have two parts and a hinge (e.g. made of wire or a piece of non-stretching fabric), located between the two parts of the shutter. This configuration is preferable for two-chamber airbags.

In another embodiment, the shutter and the through-pocket of the system for the assembly according to the invention have three parts and a hinge, located between the individual parts of the shutter. This configuration is preferable for three-chamber airbags.

In another embodiment, for each number of parts "n" of the shutters, there is "n-1" of the hinges.

The presence of one or more hinges is a convenient improvement for folding of the airbag, which is especially justified in the case of large airbags.

In another embodiment, the shutter and through-pocket of the valve system for the assembly according to the invention are not divided into part and there is no hinge. This configuration is preferable for single-chamber airbags.

According to the invention, different shapes of the first openings in the shutter (e.g. round, oval, rectangular) and the second openings in the through-pocket (e.g. round, oval, rectangular) are acceptable. Whereby, in one embodiment, the second openings in the through-pocket are not smaller than the openings located in the walls of the airbag. In a preferred embodiment, the second openings in the through-pocket have the same shape and size as the openings located in the side walls of the airbag. In one embodiment, the first openings in the shutter of the system of airbag adaptive release valves for the assembly according to the invention are of a different size and shape than the second openings of the through-pocket and the openings located in the side walls of the airbag. Therefore, it is possible to obtain different effective gas release surfaces for the airbag chambers, which results from overlapping of the first openings in the shutter with the openings of the side walls of the airbag (in particular, rescue air cushion). In one embodiment, the first openings of the shutter and the openings in the side wall are round, while the second openings in the through-pocket are rectangular. Thus, the surface area of air outflow from the airbag chambers or rescue air cushion is the result of overlapping of two circles. It is also possible to choose other shapes, so that, for example, a circle and a rectangle or two rectangles overlap. Other configurations are also possible.

According to the invention, sliding of the shutters relative to the side walls of the airbag and the through-pockets is controlled by the shutter-sliding module. In one embodiment, the shutter-sliding module is equipped with one limit switch. In another embodiment, the shutter-sliding module is equipped with two limit switches, one of which determines the point of maximum displacement of the cover in one direction and the other determines the point of maximum displacement of the cover in the other direction.

In one embodiment, the shutter-sliding module is based on a rotary drive and one or more springs.

In one embodiment, the shutter-sliding module consists of a rotary motor with a transmission, brake, clutch, drums with bearings and rolls located in the housing of the sliding system, which use bearings to straighten the shutter rolled on the drum and springs (e.g., with constant torque). The ends of the shutter are fixed to the drums in such a way that its sliding along the through-pocket causes the strap to unwind from one drum and wind on the other. In another embodiment, transmission and brake are omitted. In another embodiment, the shutter-sliding module is equipped with a rotary drive and two springs. Whereby, it is acceptable to use more springs. In another embodiment, the shutter-sliding module is equipped with two limit switches that determine the maximum displacement of the shutter in both directions. In one embodiment, the control system processes data from the limit switches and stops the rotary engine accordingly. In another embodiment, the sensors are connected to the rotary motor, which ensures that it stops without the need of transmission of the signal by the control system to the sensors. Whereby, the use of one or more springs provides a "fail-safe" function, since in case of power failure or deliberate disconnection of the clutch, the cover is brought to a defined position, which can correspond to the worst acceptable conditions for impact on the rescue air cushion.

In another embodiment, the shutter-sliding module is equipped with a pair of counter-rotating rotary drives. In one embodiment, each of the rotary drives consists of a rotary motor with a transmission, brake, clutch, drum with bearings and sliding module located in a housing, wherein the drum is used for winding / unwinding the shutter. In another embodiment, the shutter-sliding module is equipped with two limit switches that determine the maximum displacement of the shutter in both directions. In one embodiment, the control system processes data from the limit switches and stops the drives accordingly. In another embodiment, the sensors are connected to the drives, which ensures that they stop without the need of processing the signal from the sensors by the control system.

In another embodiment, the shutter-sliding module consists of two linear actuators working in opposite directions (e.g. electric or pneumatic), which are connected to the shutter by a metal cable sliding inside a housing (similar to bicycle brakes). As the linear actuators work in opposite directions, the shutter is pulled by one actuator and pushed by the other. Whereby, the opposition of these linear actuators ensures effective displacement of the shutters in both directions. In one embodiment, the shutter-sliding module is equipped with two limit switches that determine the maximum displacement of the shutter in both directions. In one embodiment, the control system processes data from the limit switches and stops the actuators accordingly. In another embodiment, the sensors are connected to the actuators, which ensures that they stop without the need to process the signal from the sensors by the control system.

In one embodiment, the shutter-sliding module consists of two pneumatic linear actuators which work in opposite directions and use the same source of compressed gas as the pneumatic frame of the airbag with the system according to the invention. In another embodiment, the pneumatic actuators use a separate gas source. In one embodiment, the shutter-sliding module is equipped with two limit switches.

In another embodiment, the shutter-sliding module consists of a linear actuator (e.g., electric or pneumatic) and a pulling element equipped with a second spring (e.g., fixed-force spring) that ensures safe operation of the invention in the event of a failure or lack of power when the pulling element brings the shutter to a specific position, e.g., corresponding to the air release in accordance with the design of current non-adaptive rescue air cushions. Moreover, due to the opposing arrangement of the actuator and the pulling element, an effective displacement of the shutters in both directions is ensured. In one embodiment, the shutter-sliding module is equipped with two limit switches.

In one embodiment, the shutter-sliding module of the system according to the invention is equipped with a system for measuring the position of the first shutter openings relative to the openings in the side walls and the second openings of the through-pocket.

In one embodiment, the measuring system consists of at least one row of perforations for non-contact measurement on the shutter and an optical sensor consisting of at least one emitter and a receiver. In one embodiment, the measuring system consists of one perforation row and one emitter and receiver. In another embodiment, the measuring system includes two rows of perforations. Whereby, the use of two or more rows of perforations is a preferred embodiment of the invention, since the use of multiple rows of perforations (understood as two or more rows of perforations) additionally provides the ability to recognize the direction of displacement of the shutter and increases the measurement resolution.

In another embodiment, the measuring system consists of one emitter and a receiver. In one embodiment, the emitter is an IR diode. In one embodiment, the receiver is an IR phototransistor. In one embodiment, the emitter and receiver are located in one housing. In another embodiment, the emitter and receiver are two independent components. In one embodiment, the optical system is located inside the shutter-sliding module.

In another embodiment, the measuring system consists of one or more rows of perforations for contact measurement and a rotary displacement sensor. In one embodiment, the measuring system consists of a single row of perforations for contact measurement and a rotary displacement sensor that measures the position of the cover relative to the wall or through-pocket based on the contact between the fixed measuring wheel and the movable shutter. In one embodiment, the drive of the wheel is transferred according to the principle of a belt with perforations of a fixed scale which drives a gear coupled (directly or indirectly) with a shaft of the system that converts the angular position of the measuring wheel into an electrical signal.

In another embodiment, the measuring system consists of a rotary displacement sensor and perforations are omitted. In this variant, driving force is transferred by friction.

In a preferred embodiment, the rotary displacement sensor may in particular be a multi-turn potentiometer and an encoder (e.g. with an optical or magnetic transducer, incremental or absolute).

In one embodiment, a rotary displacement sensor is located inside the shutter-sliding module.

In another embodiment, the measuring system consists of at least the first two contact elements located on the shutter and the corresponding second contact elements located on the through-pocket or on the side wall of the airbag equipped with the system according to the invention. In one embodiment, the measuring system consists of the first two contact elements located on the shutter and the corresponding second contact elements located on the side wall of the airbag equipped with the system according to the invention. In another embodiment, the measuring system consists of the first three contact elements located on the shutter and the corresponding second three contact elements located on the through-pocket. Regardless of the number of contact elements used, in each embodiment the number of first contact elements corresponds to the number of second contact elements. The position of the cover is determined based on the contact of the first and second contact elements.

In a preferred embodiment, the contact elements of the measuring system are shifted relative to each other, so that it is possible to obtain a different measurement resolution of the degree of opening of the release valves (resulting from the relative position of the openings).

In another embodiment, the measuring system consists of a measuring ruler (e.g. resistive, magnetic or capacitive) and the relative position of the shutter is determined by the displacement of the measuring pattern relative to the measuring point. In one embodiment, the measurement pattern is located on the shutter. In another embodiment, the measurement pattern is located on the side wall. In another embodiment, the measurement pattern is located in the through-pocket.

In one embodiment, the measuring system is coupled with a system indicating the degree of opening of the valves, resulting from the relative position of the shutters. In this case, data from the measuring system are used by the signalling system to communicate the degree of valve opening to the airbag operator. Whereby, in one embodiment, diodes located on the rescue air cushion indicate the degree of opening of the valves. In another embodiment, the degree of opening of the valves is indicated on a small screen displaying information. In another embodiment, data can be transmitted by wire or wirelessly to the system in which the impact parameters are entered (e.g. remote control, impact parameter identification system, computer, etc.).

In one embodiment, the control system is equipped with a microcontroller with memory containing an algorithm for adaptation of the airbag (e.g. rescue air cushion) to the impact conditions. Based on predicted impact conditions entered into the control system, the microcontroller calculates the optimal gas release from at least one chamber by determining the optimal overlap of the openings in the side walls of the airbag with the first and second openings, thus determining the position of the shutters relative to the side walls and through-pockets. Then it sends data on the determined overlap and position of the shutter-sliding module, whereby data on impact conditions constitute at least one parameter including mass of the landing person, impact speed, height or a combination thereof.

In another embodiment, the control system is equipped with a microcontroller with memory containing an algorithm for adaptation of the airbag to the impact conditions. Based on predicted impact conditions entered into the control system, the microcontroller calculates the optimal gas release from at least one chamber by determining the optimal overlap of the openings in the side walls of the airbag with the first and second openings, thus determining the position of the shutters relative to the walls and through-pockets. Then it sends a control signal to the shutter-sliding module.

In another embodiment, the control system is a combinational digital system composed of discrete logic gates.

In one embodiment, part of the control system is a module which processes signal from the relative position measuring system of the shutter. The module can process the position using a counter system that processes impulses from an optical measuring system or encoder.

In one embodiment, in which the position measurement is represented by an electrical analogue quantity (i.e. in the case of a measuring system comprising a potentiometer or a linear measurement pattern), the control system is equipped with an analogue-to-digital converter. In another embodiment, the position can also be inferred directly from logical combinations as a result of electrical contact between the electrical contacts of the shutter and the contacts located in the side wall or through-pocket.

In one embodiment, communication between the operator and the control system can be wired or wireless. The wireless method may be based on the transmission of information using radio waves or optical infrared light waves. In both cases, data transmission between the operator and the control system is performed using digital signal modulation.

According to the invention, the airbag assembly consists of a pneumatic frame and an airbag supported by it, which has one or more chambers and openings.

In one embodiment, the airbag is a rescue air cushion. In one embodiment, the airbag is essentially a rectangular cuboid. Other shapes of the airbags are also acceptable.

In one embodiment, the openings are arranged in a single column located by all vertical edges of the walls of the airbag. In another preferred embodiment, the openings are arranged in two columns located near each vertical edge of the walls of the airbag. The openings can also be arranged in three or more columns. Whereby, the valve arrangement for the assembly according to the invention makes it possible to shutter the whole or a part of the airbag opening.

In another embodiment, the openings are arranged in a single row located by each horizontal edge of the airbag wall. In a preferred embodiment, the openings are arranged in two rows located by each horizontal edge of the airbag side wall. In another embodiment, the openings are arranged in two rows located by two horizontal side edges of the airbag (e.g., edges of two opposite sides of the airbag).

In another embodiment, the airbag for the assembly according to the invention has three chambers arranged one on top of the other, and the openings are arranged in a row located near the horizontal edges of the chambers - i.e. in the areas corresponding to the division of the airbag into chambers (which are not necessarily identical to the edges of the entire side walls).

In another embodiment, the airbag for the assembly according to the invention is equipped with two chambers located one on top of the other, and the openings are arranged in two rows located in the middle of the wall (one in the upper chamber, the other in the lower chamber), symmetrical to the edge dividing the bag into chambers.

In one embodiment, the airbag for the assembly according to the invention has only one chamber. In another embodiment, the airbag for the assembly according to the invention has two chambers. In another embodiment, the airbag for the assembly according to the invention has three chambers. The airbag for the assembly according to the invention can also have more chambers.

Whereby, the division of the airbag into chambers is a horizontal division, in which the chambers are located one on top of the other. The division can also be vertical, as a result of which the airbag chambers will be located one next to the other.

Whereby, if the airbags have two or more chambers, selected chambers (e.g. one, two, each one) may be divided into sub-chambers.

In one embodiment, the airbag for the assembly according to the invention has three vertical chambers, one on top of the other, in which the middle chamber is divided horizontally into two sub-chambers.

In another embodiment, the airbag for the assembly according to the invention has two vertical chambers arranged side by side, which are divided into two horizontal sub-chambers (one on top of the other). The division of the individual vertical chambers may also be different.

In one embodiment, a cross-shaped pneumatic element is mounted in the upper plane of the pneumatic frame of the airbag for the assembly according to the invention, which increases the rigidity of the airbag more rigid and provides favourable squeeze characteristics.

In another embodiment, in the upper plane of the pneumatic frame of the airbag for the assembly according to the invention, there is a flat chamber connected to the frame, which increases the relative rigidity of the airbag according to the invention and provides favourable squeeze characteristics.

### Embodiment 1.

A system of adaptive release valves for the assembly according to the invention is shown in the figure, in which 1 is the airbag, **2 -** pneumatic frame, **3** - chamber, **4** - openings in the side walls of the airbag, **5** - walls of the airbag, **6 -** sliding shutter, **7** - through-pocket, **8** - hinge, **9** - first openings, **10** - second openings, **11** - shutter-sliding module, **12** - rotary drive, **13 -** transmission, **14** - brake, **15 -** clutch, **16** - drum, **17 -** bearings, **18** - rolls straightening the rolled / rolled out shutter, **19** - spring, **20** - system for measuring the relative position of the shutter openings relative to the openings in the side walls and through-pockets, **21** - perforations for non-contact measurement of the shutter position, **22** - optical sensor, **23** - perforations for contact measurement, **24** - rotary displacement sensor, **25** - first contact elements, **26** - second contact elements, **27** - measurement pattern, **28 -** measuring point, **29** - linear actuator, **30 -** pulling element, **31** - second spring, **32** - metal cable, **33** - housing, **34** - control system, **35** - power source.

In this non-limiting embodiment, a system of adaptive release valves is implemented in the airbag 1 of the assembly of the invention, which in this embodiment is a rescue air cushion. Rescue air cushion 1 is put up on a pneumatic frame on which an airbag is spread, which is equipped with a pocket for a compressed air tank on the side. In this embodiment, the airbag is substantially a rectangular cuboid and has two chambers.

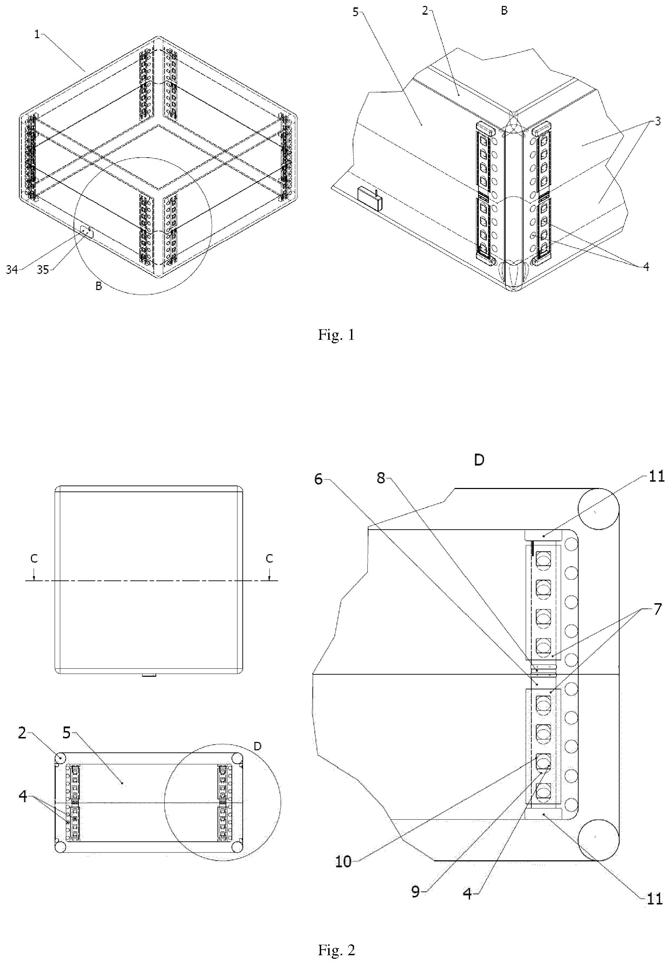

The airbag is equipped with openings **4** located near all vertical edges of its side walls **5.** Whereby, as shown in Fig. 1, the openings **4** are arranged in two columns of openings **4** near each edge of the side walls **5.**

In this embodiment, one column of openings **4** is combined with a sliding shutter **6** and a through-pocket **7.** In this embodiment, the shutter **6** is made of plastic, e.g. tribo-tape, but a rigid material can also be used.

Whereby, the side wall **5** of the bag combined with the through-pocket **7** provides a guide for the sliding shutter **6.** By placing the shutter **6** between the side wall **5** and the through-pocket **7,** the shutter **6** can only slide in one direction. In this embodiment, the shutter **6** moves vertically, while the valve arrangement according to the invention can be analogous for the bags **1** with the openings **4** arranged horizontally, i.e. in a row or rows located, e.g., near the centre of the side wall **5** of the airbag.

In this embodiment, the shutter **6** and the through-pocket **7** have two parts, and there is a hinge **8** between the two parts of the shutter **6,** made e.g. of wire. The hinge **8** may also be made of another material, e.g. a piece of non-stretching fabric.

The shutter **6** has the first openings **9,** and the through-pocket **7** has the second openings **10,** which are not smaller than the openings **4.** The first openings **9** may be of a different size and shape than the openings **4** and **10,** which makes it possible to obtain different effective gas release surfaces from the chambers **3** of the rescue air cushion **1,** which result from overlapping of the first openings **9** of the shutter **6** and the openings **4** of the side walls **5** of the chambers **3** of the rescue air cushion **1.** In addition, if the second openings **10** are not larger than the openings **4,** the gas release surface results from the displacement of the first openings **9** relative to the second openings **10.** As shown in Fig. 2, in this embodiment, the openings **4** in the side wall **5** and the first openings **9** in the shutter **6** are round, while the second openings **10** in the through-pocket **7** are rectangular. In this embodiment, the outflow surface area is the result of overlapping of two circles, since in this particular case the width and height of the rectangle is greater than or equal to the diameter of the largest opening, and therefore the rectangle extends beyond the circle. In the assembly according to the invention, a different choice of shapes is possible, e.g. a circle and a rectangle, two rectangles, etc.

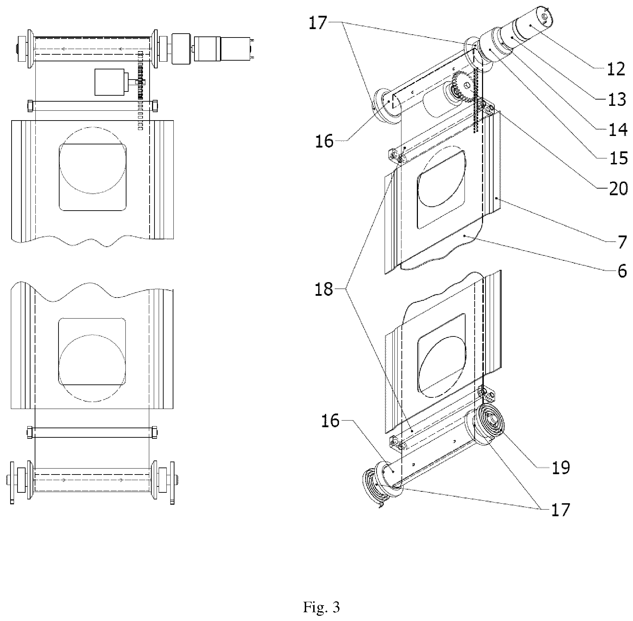

Sliding of the sliding shutter **6** relative to the side walls **5** and through-pockets **7** is provided by the shutter-sliding module **11,** which is connected to the control system **34** and power source **35.** The sliding module **11** is further equipped with a system **20** for measuring the relative position of the openings **9** of the shutter **6** relative to the openings **4** in the side walls **5** and the openings **10** in the through-pockets **7.** As shown in Fig. 3, in this embodiment, the sliding module **11** consists of a rotary motor **12** with an optional transmission **13,** optional brake **14,** clutch **15,** drums **16** with bearings in the housing of the sliding system **11** using bearings **17,** rolls **18** straightening the shutter **6** that is rolled out/rolled on the drum **16,** two limit switches and a spring **19.** In this embodiment, the spring **19** is a constant-torque spring. The ends of the shutter **6** are fixed to the drums **16** in such a way that its movement along the through-pocket **7** causes the shutter **6** to roll out from one drum **16** and roll on the other. The use of the spring **19** provides "fail-safe" function, since in the event of a power failure or intentional disconnection of the clutch **15,** the shutter **6** is brought to a specific position that may correspond to the worst permissible conditions of impact on rescue air cushion.

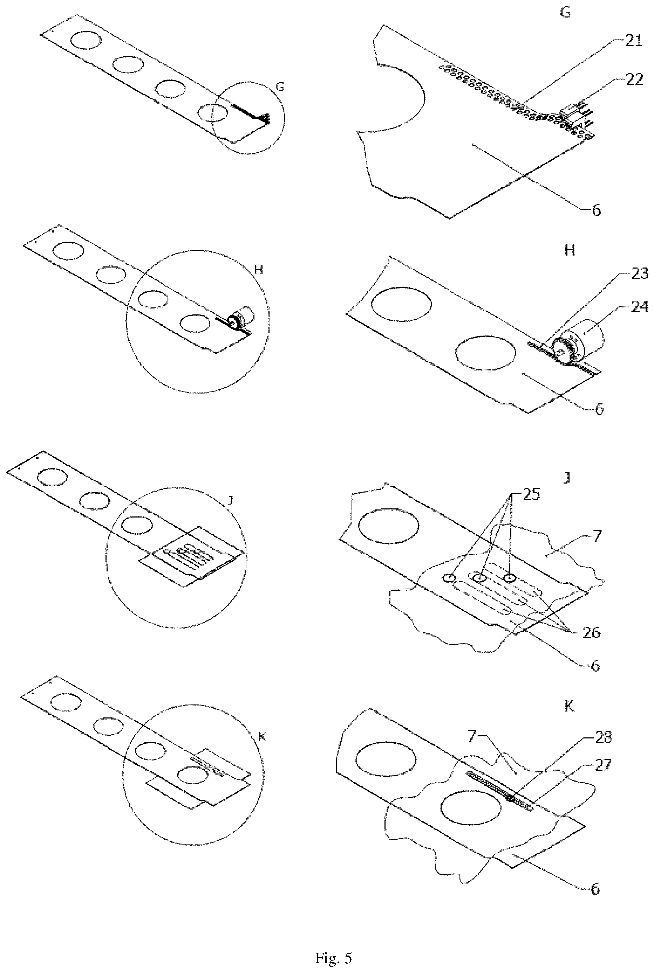

Variants of the measuring system **20** are shown in Fig. 5, where:
- ***Variant 1:*** Measurement of the relative position of the shutter **6** using a non-contact optical method;
- ***Variant 2:*** Measurement of the relative position of the shutter **6** using an encoder;
- ***Variant 3:*** Measurement of the relative position of the shutter **6** using contact elements;
- ***Variant 4:*** Measurement of the relative position of the shutter **6** using a linear measuring system.

In this embodiment, the measuring system **20** is an optical system that consists of a non-contact measurement perforation **21** in the shutter **6** and a measuring element **22** consisting of an emitter (e.g., an infrared diode - IR) and a receiver (e.g., an infrared phototransistor-IR), as shown in Fig. 5, detail G.

In this embodiment, the emitter and receiver are placed in a common housing, but they can also be two independent components. Measurement is performed by counting the light impulses as a result of the movement of the shutter **6** relative to the optical measuring system **22.**

The contactless measuring perforations **21** may be of various shapes and may be arranged along the edge of the shutter **6** in several rows. As shown in Fig. 5 - detail G, in this embodiment, the contactless measuring perforations **21** are circular openings arranged along the edge of the shutter **6** in two rows with different phase shifts. Whereby, the location of the openings at the edge results from the following factors:
- no collision with the outlet openings cut in the cover, which positively affects the more compact design of the shutter;
- the possibility of using an optical sensor in an integrated emitter and detector housing (as shown in Fig. 5 variant G).

In this embodiment, the two rows are phase-shifted by 180 degrees (which gives a four times higher resolution than with a single-row system). The use of two - or more - row perforations additionally provides the ability to recognize the direction of displacement of the shutter **6** and increase the measurement resolution). In this embodiment, the optical system is located inside the shutter-sliding module **11.**

In addition, the measuring system **20** interacts with a system signalling the degree of opening of the valves, resulting from the relative position of the shutters **6.** Data from the measuring system **20** is used by the signalling system to send information about the degree of opening of the valves to the operator of the airbag **1.** In this embodiment, diodes located on the rescue air cushion signal the degree of the opening of the valves. Data can also be transmitted (in a wired or wireless manner) to the system, where impact parameters are entered (e.g. remote control, impact parameters identification system, computer, etc.) for the control system **34.**

The relative position of the shutters **6** is controlled by the module **11** and a control system **34** with a power source **35,** which may be, e.g., a battery.

In this embodiment, the control system **34** is equipped with a microcontroller with a memory containing an algorithm for adapting the rescue air cushion **1** to the impact conditions (e.g. impact speed, mass of the landing person, height of the fall of the landing person), which calculates the optimal gas release from the chambers **3,** based on the data of the conditions entered into the control system **34** (in a wired or wireless manner), by determining the optimal overlap of the openings of the rescue air cushion **4** with the first **9** and second openings **10,** determining the position of the shutters **6** relative to the side walls **5** and through-pockets **7.** It then sends a control signal to the shutter-sliding module **11,** which ensures the displacement of the shutter **6,** and consequently the appropriate overlap of the openings **4, 9** and **10,** as well as the target release of gas from chambers **3** of the rescue air cushion 1, which should guarantee gentle stopping of persons of different weights jumping from different heights, landing on the rescue air cushion **1.**

Communication between the operator and the control system **34** may be wired or wireless. The wireless method may be based on the transmission of information using radio waves or optical infrared light waves. In both cases, data transmission between the operator and the control system is performed using digital signal modulation.

The control system **34** can also be a combinational digital system composed of discrete logic gates. Part of the control system is a module which processes signal from the relative position measuring system of the shutter. The module can process the position using a counter system that processes impulses from an optical measuring system or encoder. If the position measurement is represented by an electrical analogue quantity (i.e. in the case of a measuring system comprising a potentiometer or a linear measurement pattern), the control system is equipped with an analogue-to-digital converter. The position can also be inferred directly from logical combinations as a result of electrical contact between the electrical contacts of the cover and the contacts located in the side wall or through-pocket.

### Embodiment 2.

A system for the assembly according to the invention implemented in the air cushion **1** as in embodiment 1, except that the second openings **10** have the same shape and size as the openings **4** located in the side walls of the rescue air cushion **1.** The degree of opening of the valves is indicated on a small screen displaying information.

### Embodiment 3.

A system for the assembly according to the invention implemented in the airbag **1** as in embodiment 1, except that the shutter-sliding module **11** is equipped with a pair of counter-rotating rotary drives, each of which consists of a rotary motor **12** with a transmission **13,** brake **14,** clutch **15** and a drum with bearing and located in the housing of the sliding module, whereby the drum and the bearings **17** are used to wind/unwind the shutters. Moreover, the cover-sliding module **11** is equipped with two limit switches that determine the maximum displacement of the shutters **6** in both directions. Whereby, the control system **34** processes data from the limit switches and stops the rotary engines accordingly.

### Embodiment 4.

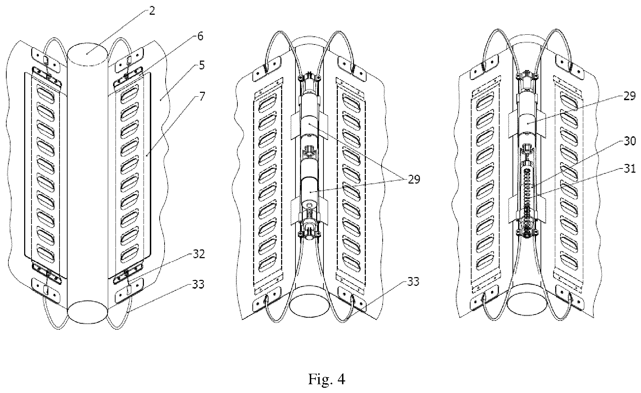

System for the assembly according to the invention implemented in the airbag **1** as in embodiment 1, except that the shutter-sliding module **11,** as shown in Fig. 4, consists of two linear actuators **29** working in opposite directions, which are connected to the shutters **6** by a metal cable **32** sliding inside a housing **33** (similar to bicycle brakes). As the linear actuators **29** work in opposite directions, the shutter **6** is pulled by one actuator and pushed by the other. Due to the opposing arrangement of the linear actuators **29,** an effective displacement of the shutters **6** in both directions is ensured. In this embodiment, the actuators **29** are pneumatic, but electric actuators may also be used. In addition, in this embodiment, the compressed gas source is the same as the gas source of the pneumatic frame **2.** Separate gas sources can also be used for the frame **2** and module **11.**

### Embodiment 5.

System for the assembly according to the invention implemented in the airbag as in embodiment 1, except that the shutter-sliding module **11** consists of a linear actuator **29** and a pulling element **30** equipped with a second spring **31** (e.g., with constant force). Whereby, electric or pneumatic actuators **29** can be used.

Due to the opposing arrangement of the actuator **29** and the pulling element **30,** an effective displacement of the shutters 6 in both directions is ensured. Moreover, the use of a pulling element **30** with the second spring **31** provides a "fail-safe" function, since in the event of a malfunction or power failure, the shutter is brought to a specific position, e.g. for air release according to the design of current non-adaptive rescue air cushions.

### Embodiment 6.

System for the assembly according to the invention implemented in the airbag **1** as in embodiment 1, except that the measuring system **20** is based on perforations for contact measurement **23** and a rotary displacement sensor **24** that measures the position of the shutter **6** relative to the side wall **5** or through-pocket **7** based on the contact between the fixed measuring wheel and the movable shutter **6.** In this embodiment, the drive of the wheel is transferred to the shutter **6** according to the principle of a belt with perforations of a fixed scale which drives a gear (Fig. 5 - detail H) coupled (directly or indirectly) with a shaft of the system that converts the angular position of the measuring wheel into an electrical signal. The rotary displacement sensor **24** may in particular be a multi-turn potentiometer and an encoder (e.g. with an optical or magnetic transducer, incremental or absolute). Whereby, in this embodiment, the sensor **24** is located inside the sliding module **11.**

Driving force can be transferred to the wheel by friction (if perforations **23** are omitted).

### Embodiment 7.

A system for the assembly according to the invention implemented in the air cushion as in embodiment 1, except that the measuring system **20** consists of the first three contact elements **25** located on the shutter 6 and the corresponding second three contact elements **26** located on the through-pocket **7** or shutter **5** of the rescue air cushion **1** (Fig. 5 - detail J). The relative position of the shutter **6** is measured by electrical contact between the contact elements **25** and **26.** Electrical contact between the fixed and movable contacts is provided by the placement of elastic material (e.g. with a sponge-like structure, a pressure spring) exerting pressure on the electrical contacts. Whereby, displacement of the contact elements relative allows for different resolution of the measurement release valves opening.

### Embodiment 8.

System for the assembly according to the invention implemented in the airbag **1** as in embodiment 4, except that the linear actuators **29** are electric actuators. Moreover, the shutter-sliding module **11** is equipped with two limit switches that determine the maximum displacement of the shutters **6** in both directions. The measuring system **20** consists of a measuring ruler (Fig. 5 - detail K). Resistance ruler, magnetic ruler or capacitive ruler can be used. The relative position of the shutter **6** is determined by the displacement of the measurement pattern**27** relative to the measurement point **28.** The measurement pattern can be located both on the shutter **6,** and on the side wall **5** or through-pocket **7.**

### Embodiment 9.

A system for the assembly according to the invention implemented in the air cushion as in embodiment 1, except that the openings **4** in the side walls **5** of the airbag **1** are arranged in two columns near each vertical edge of the side walls **5,** and each of these columns has a separate sliding shutter **6** and a through-pocket **7.**

### Embodiment 10.

An airbag assembly according to the invention consisting of a pneumatic frame **2** and an airbag with one chamber **3** spread on it, with openings **4** arranged in a single column located near the edges of its side walls **5.** Moreover, the airbag 1 in the side wall has a pocket for a compressed air tank.

The airbag **1** is equipped with a system according to embodiment 1, except that the shutter **6** and the through-pocket **7** are not divided into parts and the hinge **8** is not present. In the upper plane of the pneumatic frame **2** there is a pneumatic element in the shape of a cross.

### Embodiment 11.

An airbag assembly according to the invention consisting of a pneumatic frame **2** and an airbag with three chambers **3** spread on it, with openings **4** arranged in two columns located near the edges of its side walls **5.** The airbag **1** is equipped with a system according to embodiment 1, except that the shutter **6** and the through-pocket **7** are divided into three parts. Moreover, the individual parts of the shutter **6** are connected by hinges **8** made, for example, from a piece of non-stretching fabric. In the upper plane of the pneumatic frame **2** there is a flat chamber connected to the frame **2,** which increases the relative rigidity of the airbag **1** and provides favourable squeeze characteristics.

### Embodiment 12.

In this embodiment, the airbag assembly consists of a pneumatic frame **2** and an airbag with two chambers **3,** one on top of the other, spread on the frame. Moreover, the airbag **1** in the side wall has a pocket for a compressed air tank. The openings **4** are arranged in two rows located in the middle of the side wall (one in the upper chamber, the other in the lower chamber) symmetrically to the edge dividing the airbag **1** into chambers **3.**

The airbag **1** is equipped with a system according to embodiment 1, except that the location and movement of the shutter **6** is adapted to the row arrangement.

### Embodiment 13.

The airbag **1** as in embodiment 12, except that it has three chambers arranged one on top of the other, and the openings **4** are arranged in a single row located near each horizontal edge of the chambers, i.e., in the areas corresponding to the division of the airbag **1** into chambers **3.**

### Embodiment 14.

In this embodiment, the airbag assembly consists of a pneumatic frame **2** and an airbag spread on it with three chambers **3,** located one next to the other. The openings **4** are arranged in a single row located near the horizontal edge of the side wall. Whereby, each of the three chambers **3** is divided horizontally into two sub-chambers.

The airbag **1** is equipped with a system according to embodiment 1, except that the location and movement of the shutter **6** is adapted to the row arrangement.

## Claims

1. An airbag assembly, in particular a rescue air cushion, consisting of a pneumatic frame and an airbag supported by it, wherein the airbag has at least one chamber (3) and openings (4) arranged in at least one column located near the vertical edges of its side walls (5) or in at least one row located by at least one horizontal edge of the side wall (5), basically in the middle of the side wall (5) or at the horizontal edge of the chamber (3), **characterized in**
**that** the airbag comprises a system of adaptative release valves, wherein the at least one column or row is combined with at least one sliding shutter (6) with the first openings (9) and at least one through-pocket (7) with second openings (10), wherein the shutter (6) is placed between the side wall (5) and the through-pocket (7), and the side wall (5) and the through-pocket (7) provide a guide for the shutter (6) controlled by a shutter-sliding module (11), which is connected to a control system (34) and power source (35).

2. Airbag assembly according to claim 1, **characterized in that** the shutter-sliding module (11) is equipped with a rotary actuator (12) and at least one spring (19) or a pair of counter-rotating rotary actuators (12) or a linear actuator (29) and a pull-element (30) or a pair of linear actuators (29) working in opposite directions.

3. Airbag assembly according to claim 1 or 2, **characterized in that** the control system (34) is equipped with a microcontroller with a memory containing an algorithm for adapting the airbag (1) to the impact conditions, which is configured to calculate the optimal gas release from the at least one chamber (3), based on the data of the expected impact conditions entered into the control system (34), by determining the optimal overlap of the openings (4) in the side walls (5) of the airbag (1) with the first (9) and second openings (10), determining the position of the shutters (6) relative to the side walls (5) and through-pockets (7) wherein it is configured to then send a control signal to the shutter-sliding module or sends information about the intended overlap and position to the shutter-sliding module (11), whereby impact conditions data constitute at least one parameter, which includes the weight of the landing person, impact speed, height, or a combination thereof.

4. Airbag assembly according to any of the preceding claims 1-3, **characterized in that** the shutter (6) and the through-pocket (7) have two parts, and between the two parts of the shutter (6) there is a hinge (8).

5. Airbag assembly according to any of the preceding claims 1-4, **characterized in that** the shutter-sliding module (11) is equipped with a system (20) for measuring the position of the first openings (9) of the shutter (6) relative to the openings (4) in the side walls (5) and the second openings (10) of the through-pocket (7).

6. Airbag assembly according to any of the preceding claims 1-5, **characterized in that** the shutter-sliding module (11) is equipped with one or two limit switches.

7. Airbag assembly according to claim 5, **characterized in that** the measuring system (20) consists of at least one row of perforation for non-contact measurement (21) on the shutter (6) and at least one optical sensor (22) consisting of an emitter and a receiver.

8. Airbag assembly according to claim 5 or 6 when dependent on claim 5, **characterized in that** the measuring system (20) consists of at least one row of perforation for contact measurement (23) and a rotary displacement sensor (24).

9. Airbag assembly according to claim 5 or claim 6 when dependent on claim 5, **characterized in that** the measuring system (20) consists of at least the first two contact elements (25) located on the shutter (6) and the corresponding second contact elements (26) located on the through-pocket (7) or on the side wall (5) of the airbag (1).

10. Airbag assembly according to claim 5 or claim 6 when dependent on claim 5, **characterized in that** the measuring system (20) consists of a measuring ruler.

11. Airbag assembly according to claim 5, claim 6 when dependent on claim 5, or any of the claims 7-10, **characterized in that** the measuring system (20) it is coupled with a system indicating the degree of opening of the release valves.

12. Airbag assembly according to claim 1 **characterized in that** in the upper plane of the pneumatic frame (2) there is a pneumatic element in the shape of a cross or a flat chamber.

13. Airbag assembly according to claim 1 or 12 **characterized in that** it comprises at least two chambers (3) arranged side by side or one on top of the other.

14. Airbag assembly according to claim 13 **characterized in that** at least one chamber (3) is divided horizontally or vertically into at least two sub-chambers.

## Patentansprüche

1. Airbagsystem, insbesondere Sprungkissen, mit einem pneumatischen Rahmen und einem von diesem getragenen Airbag, wobei der Airbag mindestens eine Kammer (3) und Öffnungen (4) hat, die in mindestens einer Spalte nahe den vertikalen Kanten der Seitenwände (5) oder in mindestens einer Reihe an mindestens einer horizontalen Kante der Seitenwände (5) angeordnet sind, im Wesentlichen in der Mitte der Seitenwände (5) oder an der horizontalen Kante der Kammer (3) , **dadurch gekennzeichnet, dass** der Airbag eine adaptive Ablassventilanordnung umfasst, bei der mindestens eine Spalte oder Reihe mit mindestens einer mit ersten Öffnungen (9) versehenen verschiebbaren Blende (6) und mindestens einer mit zweiten Öffnungen (10) versehenen Durchgangstasche (7) nebeneinander angeordnet ist, wobei der Verschluss (6) zwischen der Seitenhülle (5) und der Durchgangstasche (7) positioniert ist und die Seitenhülle (5) und die Durchgangstasche (7) eine Führung für den Verschluss (6) bilden, der durch das Modul zur Verschiebung von Blenden (11) gesteuert wird, das mit dem Steuersystem (34) und der Energiequelle (35) verbunden ist.

2. Airbagsystem nach Anspruch 1, **dadurch gekennzeichnet, dass** das Modul zur Verschiebung von Blenden (11) auf einem Drehantrieb (12) und mindestens einer Feder (19) oder einem Paar gegenläufig angeordneter Drehantriebe (12) oder einem Linearantrieb (29) und einem Rückzugselement (30) oder einem Paar gegenläufig angeordneter Linearantriebe (29) basiert.

3. Airbagsystem nach Anspruch 1 oder 2, **dadurch gekennzeichnet, dass** das Steuersystem (34) mit einem Mikrocontroller mit einem Speicher versehen ist, der einen Algorithmus zur Anpassung des Airbags (1) an die Aufprallbedingungen enthält, der aufgrund der in das Steuersystem (34) eingegebenen Daten der prognostizierten Aufprallbedingungen den optimalen Gasaustritt aus mindestens einer Kammer (3) berechnet, indem er die optimale Überlappung der Öffnungen (4) in den Seitenhüllen (5) des Airbags (1) mit den ersten (9) und den zweiten Öffnungen (10) bestimmt, durch Bestimmen der Position der Öffnungen (6) in Bezug auf die Seitenhüllen (5) und die Durchgangstaschen (7), und dann entweder ein Steuersignal an das Modul zur Verschiebung von Blenden sendet oder Informationen über die bestimmte Überlappung und Position an das Modul zur Verschiebung von Blenden (11) sendet, wobei die Aufprallbedingungsdaten mindestens ein Parameter sind, der Landemasse, Aufprallgeschwindigkeit, Höhe oder eine Kombination davon umfasst.

4. Airbagsystem nach einem der vorhergehenden Ansprüche 1 bis 3, **dadurch gekennzeichnet, dass** die Blende (6) und die Durchgangstasche (7) zweiteilig sind und zwischen den beiden Teilen der Blende (6) ein Scharnier (8) angeordnet ist.

5. Airbagsystem nach einem der vorhergehenden Ansprüche 1 bis 4, **dadurch gekennzeichnet, dass** das Modul zur Verschiebung von Blenden (11) mit einem Messsystem (20) zur Messung der relativen Position der ersten Öffnungen (9) der Blende (6) in Bezug auf die Öffnungen (4) in den Seitenhüllen (5) und die zweiten Öffnungen (10) der Durchgangstasche (7) versehen ist.

6. Airbagsystem nach einem der vorhergehenden Ansprüche 1 bis 5, **dadurch gekennzeichnet, dass** das Modul zur Verschiebung von Blenden (11) mit einem oder zwei Grenzwertschaltern versehen ist.

7. Airbagsystem nach Anspruch 5, **dadurch gekennzeichnet, dass** das Messsystem (20) mindestens aus einer Reihe von Perforationen zur berührungslosen Messung (21) auf der Blende (6) und mindestens einem optischen Sensor (22) mit einem Sender und einem Empfänger besteht.

8. Airbagsystem nach einem der vorhergehenden Ansprüche 5 bis 6, wenn abhängig von Anspruch 5, **dadurch gekennzeichnet, dass** das Messsystem (20) mindestens aus einer Reihe von Perforationen zur kontaktierenden Messung (23) und einem Drehwegsensor (24) besteht.

9. Airbagsystem nach einem der vorhergehenden Ansprüche 5 bis 6, wenn abhängig von Anspruch 5, **dadurch gekennzeichnet, dass** das Messsystem (20) mindestens aus zwei ersten Kontaktelementen (25), die an der Blende (6) angeordnet sind, und zwei entsprechenden zweiten Kontaktelementen (26), die an der Durchgangstasche (7) oder in der Seitenhülle (5) des Airbags (1) angeordnet sind, besteht.

10. Airbagsystem nach einem der vorhergehenden Ansprüche 5 bis 6, wenn abhängig vom Anspruch 5, **dadurch gekennzeichnet, dass** das Messsystem (20) aus einem Messlineal besteht.

11. Airbagsystem nach Anspruch 5, Anspruch 6, wenn abhängig vom Anspruch 5, oder einem der Ansprüche 7 bis 10, **dadurch gekennzeichnet, dass** das Messsystem (20) mit einem System zur Anzeige des Öffnungsgrades der Ablassventile gekoppelt ist.

12. Airbagsystem nach Anspruch 1, **dadurch gekennzeichnet, dass** eine kreuzförmige oder flache Kammer in der oberen Ebene des pneumatischen Rahmens (2).

13. Airbagsystem nach Anspruch 1 oder 12, **dadurch gekennzeichnet, dass** sie mindestens zwei nebeneinander oder übereinander angeordnete Kammern (3) umfasst.

14. Airbagsystem nach Anspruch 13, **dadurch gekennzeichnet, dass** mindestens eine Kammer (3) horizontal oder vertikal in mindestens zwei Unterkammern unterteilt ist.

## Revendications

1. Un système de coussin de chute, en particulier un coussin de sauvetage, comprenant un cadre gonflable et un coussin de chute supporté par celui-ci. Le coussin de chute comprend au moins une chambre (3) et des orifices (4) disposées dans au moins une colonne située à proximité des bords verticaux des parois latérales (5), ou dans au moins une rangée positionnée près d'au moins un bord horizontal des parois latérales (5), généralement au centre desdites parois latérales (5), ou bien au bord horizontal de la chambre (3). Il **est caractérisé en ce que** le coussin de chute intègre un dispositif de soupapes de purge adaptative. Ce dispositif comprend au moins une colonne ou une rangée adjacente à un volet mobile (6) dotée de premiers orifices (9), ainsi qu'au moins une poche de passage (7) dotée de deuxièmes orifices (10). Le volet (6) est positionné entre la paroi latérale (5) et la poche de passage (7). La paroi latérale (5) et la poche de passage (7) forment ensemble un guide pour le volet (6). Celui-ci est commandé par un module de déplacement des volets (11), connecté au système de commande (34) et à la source d'énergie (35).

2. Le système de coussin de chute selon la revendication 1 **est caractérisé en ce que** le module de déplacement des volets (11) est établi sur un entraînement rotatif (12) et au moins une suspension élastique (19) ou une paire d'entraînements rotatifs (12) disposés de manière opposée, ou un actionneur linéaire (29) et un élément d'extraction (30), ou une paire d'actionneurs linéaires (29) disposés de manière opposée.

3. Le système de coussin de chute selon la revendication 1 ou 2 **est caractérisé en ce que** le système de commande (34) est équipé d'un microcontrôleur avec une mémoire contenant un algorithme d'adaptation du coussin de chute (1) aux conditions d'impact. Sur la base des données des conditions d'impact prévues introduites dans le système de commande (34), le système calcule la purge optimale des gaz d'au moins une chambre (3). Cela se fait par la détermination du chevauchement optimal des orifices (4) dans les parois latérales (5) du coussin de chute (1) avec les premiers orifices (9) et les deuxièmes orifices (10), en déterminant la position des volets (6) relativement aux parois latérales (5) et aux poches de passage (7). Le système envoie ensuite un signal de commande au module de déplacement des volets, ou transmet des informations sur le chevauchement et la position déterminés au module de déplacement des volets (11). Les données relatives aux conditions d'impact comprennent au moins un paramètre tel que la masse de la personne atterrissant, la vitesse d'impact, la hauteur de chute ou une combinaison de ces paramètres.

4. Le système de coussin de chute selon les revendications 1 à 3 précédentes **est caractérisé en ce que** le volet (6) et la poche de passage (7) sont chacun constitués de deux éléments et qu'une charnière (8) est située entre les deux parties du volet (6).

5. Le système de coussin de chute selon l'une des revendications 1 à 4 précédentes **est caractérisé en ce que** le module de déplacement des volets (11) est muni d'un système de mesure (20) pour mesurer la position relative des premiers orifices (9) du volet (6) par rapport aux orifices (4) des parois latérales (5) et aux deuxièmes orifices (10) de la poche de passage (7).

6. Le système de coussin de chute selon les revendications 1 à 5 précédentes **est caractérisé en ce que** le module de déplacement des volets (11) est muni d'un ou deux capteurs de fin de course.

7. Le système de coussin de chute selon la revendication 5 **est caractérisé en ce que** le système de mesure (20) comprend au moins une rangée de perforations pour une mesure sans contact (21) effectuée dans le volet (6) et au moins un capteur optique (22) comprenant un émetteur et un récepteur.

8. Le système de coussin de chute selon les revendications 5 à 6 précédentes, lorsqu'ils dépendent de la revendication 5, **est caractérisé en ce que** le système de mesure (20) comprend au moins une rangée de perforations pour une mesure par contact (23) et un capteur de déplacement rotatif (24).

9. Le système de coussin de chute selon les revendications 5 à 6 précédentes, lorsqu'ils dépendent de la revendication 5, **est caractérisé en ce que** le système de mesure (20) comprend au moins deux premiers éléments connecteurs (25) positionnés sur le volet (6), et deux deuxièmes éléments connecteurs correspondants (26) positionnés sur la poche de passage (7) ou dans la paroi latérale (5) du coussin de chute (1).

10. Le système de coussin de chute selon les revendications 5 à 6 précédentes, lorsqu'ils dépendent de la revendication 5, **est caractérisé en ce que** le système de mesure (20) comprend une règle graduée.

11. Le système de coussin de chute selon l'une des revendications 5 ou 6, lorsqu'elle est dépendante de la revendication 5, ou des revendications 7 à 10, **est caractérisé en ce que** le système de mesure (20) est relié à un dispositif de signalisation du degré d'ouverture des soupapes de purge.

12. Le système de coussin de chute selon la revendication **1 est caractérisé en ce que,** dans le plan supérieur du cadre pneumatique (2), se trouve un élément pneumatique en forme de croix ou de chambre plate.

13. Le système de coussin de chute selon la revendication 1 ou 12 **est caractérisé en ce qu'**il comprend au moins deux chambres (3), disposées l'une à côté de l'autre ou l'une au-dessus de l'autre.

14. Le système de coussin de chute selon la revendication 13 **est caractérisé en ce qu'**au moins une chambre (3) est divisée, en position horizontale ou verticale, en au moins deux sous-chambres.
